# EUROPEAN PATENT APPLICATION

(11) **EP 1 369 321 A2**
(43) Date of publication of application: **10.12.2003**
(21) Application number: 02027699.4
(22) Date of filing: 13.12.2002
(51) Int. Cl.: B60R 25/00

(54) **Mechanical burglar alarm for vehicles**

(30) Priority: 07.06.2002 IT MI20021249
(71) Applicant: TAVOLA S.p.A., 20141 Milano (IT)
(72) Inventor: Re, Gianpaolo, Dr., 20141 Milano (IT)
(74) Representative: La Ciura, Salvatore

(57) **Abstract**

This invention proposes a mechanical burglar alarm for vehicles, provided with means apt to signal break-in attempts.

In particular it is the matter of a mechanical burglar alarm, addressed to engage one or more controls of the vehicle to avoid its operation, associated with a sensor able to detect movements or vibrations of a certain importance given to the burglar alarm and to generate a signal which activates a transmitter, which sends a SMS to a prefixed telephone number, which can preferably match with the portable phone number of the car owner.

In this way it is possible to immediately signal the break-in attempt, without the intervention of noisy devices such as sirens or the like and without forewarning the one who is trying to force the burglar alarm.

## Description

This invention proposes a mechanical burglar alarm for vehicles, provided with means apt to signal break-in attempts.

In particular it is the matter of a mechanical burglar alarm, addressed to engage one or more vehicle controls to avoid the running thereof, associated with a sensor apt to detect movements or vibrations of a certain importance given to the burglar alarm and to generate a signal which activates a transmitter, which sends a SMS to a pre-fixed telephone number, which can preferably match with the hand-portable telephone number of the vehicle owner.

In this way it is possible to immediately signal the break-in attempt, without the intervention of noisy devices such as sirens or the like and without forewarning the one who is trying to force the burglar alarm.

As it is well known to everybody, the vehicle thefts are several, in particular of cars, which daily take place and are continuing increasing.

This has led to the development of many devices apt, even if not to avoid, at least to signal and discourage these attempts.

There are in fact known devices which activate a siren when one tries to force the car lock, devices which prevent from starting the engine or mechanical devices able to pin down the steering wheel or the gear or the brake or clutch pedals, always to fight any prowler.

This notwithstanding, all these devices, more often than not, result to be insufficient to avoid the car theft, with the problems and damages which ensue therefrom.

Burglar alarms are also known which exploit the satellite bearing system of the car position to supply information apt to allow its finding.

Also this system, anyway, although useful, it is not able to supply prompt information to the owner on a break-in attempt, which can be hardly avoided, thereby obliging the interested person to search and recover the stolen vehicle.

This invention belongs to this sector and proposes a mechanical burglar alarm for vehicles provided with means apt to signal any break-in attempt, breaking off thereby the limitations of the systems at present known.

More particularly it is the matter of a mechanical burglar alarm which in one of its embodiments can consist of pliers means which are tightened around the brake and clutch pedals to block them, and which is associated with a system surveying any movement or excessive vibration, in its turn connected to a transmitter able to generate an alarm signal and to send it, as a SMS, to a prefixed number which can be the mobile phone number of the car owner.

The system can be programmed for example to operate only in case of vibrations higher than a certain intensity or to send several messages at fixed time intervals or to send the same alarm message to two or more different numbers, for example to the car owner and to the police or the like.

This invention will be now described in detail, by way of a non limitative example, with reference to the enclosed drawings wherein:
- fig. 1 shows schematically a possible burglar alarm embodiment according to the invention;
- fig. 2 is a block diagram of the signalling system fitted in the burglar alarm;

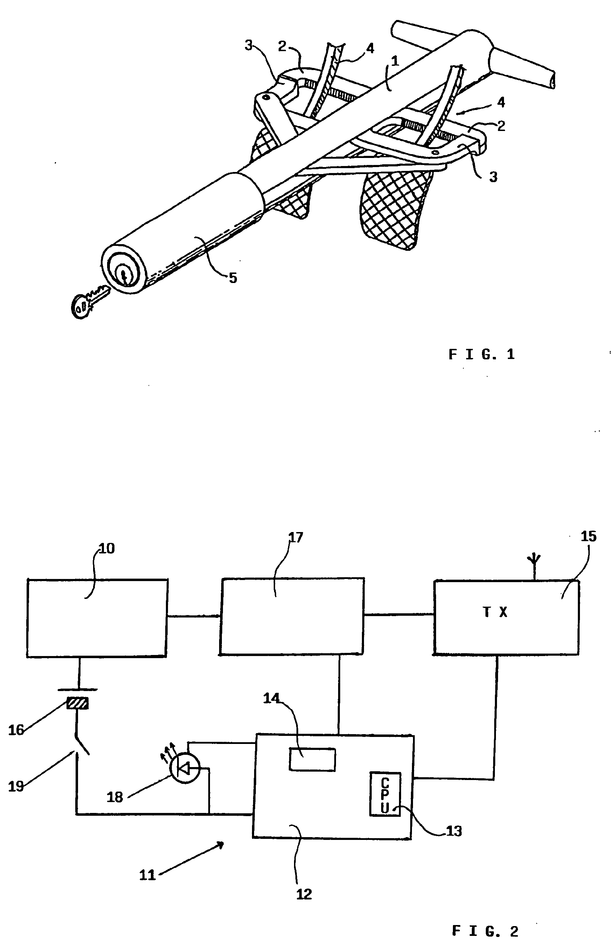

A burglar alarm version according to the invention is shown in figure 1 and substantially consists of a bar 1 provided with pliers elements with reference 2 and 3, which, in a first application modality, are provided to be tightened around the pedals 4 of the brake and the clutch of a car.

A burglar alarm with such a structure is already known, for example shown in the Italian patent no. 1,256,223.

This burglar alarm is applied by resting the end of the bar 1 to the car floor and closing therefore the pliers 2 and 3 around the pedals 4 which remained blocked.

The invention concerns a burglar alarm of this kind, that is a mechanical burglar alarm able to block whatever part of the car to avoid it from operating.

Although in the continuation, reference will be made to a burglar alarm of this kind, which will be shown so as not to leave anything out, the invention has to be considered limited to the specific embodiment shown but it will comprise any mechanical burglar alarm of the type consisting of means apt to engage a body or control of the vehicle to avoid it from operating.

These burglar alarms are generally provided with a blocking and releasing device 5 operated by a key.

According to the invention it is projected to associate with or to fit in a burglar alarm of the above mentioned type an electronic signalling device consisting of a sensor 10 able to detect shocks, shakings or vibrations of a certain importance given to the vehicle and/or to the same burglar alarm and to generate consequently a signal which is transmitted to a transmission system indicated in its whole by reference 11, which, in its turn, provides to send a SMS to a prefixed telephone number.

More particularly, the sensor 10 can be whatever sensor of,known type, such as a pendulum sensor, an inertial switch, a mercury switch or another device, preferably of the type which allows to regulate its sensibility, while the transmission system comprises a card 12 onto which a microprocessor 13 and a SIMM module 14 are assembled.

The card 2 is connected with a transmitter 15 of the type used in the mobile phones.

A battery 16 supplies the feeding necessary to the circuit, which can embody also a timer 17 and one or several signalling LED 18.

The electronic unit 11 fed by the tab pile 16, is incorporated for example in the burglar alarm by introducing the same in the bar 1 with the diode 18 remaining visible to signal the introduction and the occurred activation of the device.

For the use, the SIMM card is programmed by storing the data concerning the vehicle, for example the number plate, the owner data etc. and by storing the number or numbers to be called in an EPROM.

A general switch 19 is activated by the burglar alarm inserting key, by allowing the pile 16 to feed the different components.

In normal running conditions, also with the switch 19 closed, the circuits are not fed and there is no energy consumption, because the sensor/switch 10 disconnects the feeding card.

In case of shock, vibration or sudden movement of the burglar alarm, the sensor comes into operation and, according to the sensor chosen, can close the feeding line which allows the current generated by the pile to feed the different devices or can anyway allow the activation of the various circuits, enabling the current to feed the different components.

Further to the activation of the sensor 10, the microchip 13 provides to generate and send to the transmitter a message with the data collected by the SIMM 14.

The message will contain a prefixed text which informs the receiver of the occurred break-in attempt and will be sent to the telephone number, stored too in the SIMM.

According to an additional preferred embodiment of the invention, the SIMM can contain also other numbers stored therein, to which it can be possible to send the signal, for example the watching institute number or the police number and the microchip 13 will provide to process and send in sequence the message to all the stored numbers.

Accordingly to another preferred embodiment of the invention, the microchip 13, upon the message transmission, can also activate the timer 17 to repeat then the transmission one or more times at prefixed time intervals.

The solution object of this invention allows to obtain many advantages by increasing in a considerable way the efficacy of the burglar alarms at present used, since, besides rendering the car theft difficult, it is also able to real-time signal the break-in attempt to the person concerned, who can therefore take the due measures in time.

A skilled in the art can then provide for different modifications and variations which shall be anyway considered all comprised within this invention.

## Claims

1. Burglar alarm for vehicles, **characterized in that** it provides for the association with a mechanical device apt to engage one or more parts or controls of the vehicle to avoid its running and means, associated with this mechanical device, apt to detect the movement or an excessive vibration given to this mechanical device and to send a corresponding message to a prefixed telephone number.

2. Improved burglar alarm according to claim 1, **characterized in that** it provides mechanical devices apt to block one or more parts or controls of the vehicle and a system, fit in said blocking mechanical device, comprising means apt to detect a displacement of said mechnical device and to activate consequently a transmitter programmed to send a SMS to one or more programmed telephone numbers.

3. Burglar alarm according to claim 2, **characterized in that** said mechanical blocking device consists of a pliers device apt to block the brake and/or clutch pedals of the vehicle.

4. Burglar alarm according to claim 3, charaterized in that said blocking device fits in a sensor apt to detect a movement of the system and to generate a corresponding signal, said sensor being connected with a transmitter that, upon receipt of said signal, sends a SMS to a previously stored telephone number.

5. Burglar alarm according to claim 4, **characterized in that** said transmitter fits in a SIMM into which there are stored the data concerning the vehicle and one or more telephone number, the message has to be sent to.

6. Burglar alarm according to claim 5, **characterized in that** it provides timed control means apt to repeat cyclically the message for a predetermined number of times.

7. Burglar alarm according to claim 6, **characterized in that** it provides for a microprocessor apt to generate and send a warning message to one or more telephone numbers stored in the SIMM.
